# EUROPÄISCHE PATENTSCHRIFT

(11) **EP 2 593 506 B1**
(45) Veröffentlichungstag und Bekanntmachung des Hinweises auf die Patenterteilung: **22.02.2017**
(21) Anmeldenummer: 11743464.7
(22) Anmeldetag: 11.07.2011
(51) Int. Cl.: C08K 5/00, C08K 3/00, C08J 3/22, C08K 3/08

(54) **ZUSAMMENSETZUNG MIT SÄUREAKTIVIERBARER METALLKOMPONENTE**
COMPOSITION HAVING ACID-ACTIVATABLE METAL COMPONENT
COMPOSITION RENFERMANT UN COMPOSANT ACTIVABLE À L'AIDE D'ACIDE

(30) Priorität: 14.07.2010 DE 102010031347
(43) Veröffentlichungstag der Anmeldung: 22.05.2013
(73) Patentinhaber: Chemische Fabrik Budenheim KG, 55257 Budenheim (DE)
(72) Erfinder: WISSEMBORSKI, Rüdiger, 55435 Gau-Algesheim (DE); SCHNEE, Rainer, 55130 Mainz (DE); RATH, Gideon, 64285 Darmstadt (DE); KÜMMET, David, 55257 Budenheim (DE)
(74) Vertreter: WSL Patentanwälte Partnerschaft mbB
(86) Internationale Anmeldenummer: PCT/EP2011/061749
(87) Internationale Veröffentlichungsnummer: WO 2012/007422

(56) Entgegenhaltungen:
- EP-A1- 1 640 408
- WO-A1-2008/008715
- WO-A1-2011/020777
- WO-A2-96/40412

## Beschreibung

### Gegenstand der Erfindung

Die Erfindung betrifft eine Zusammensetzung, welche eine Kunststoffmatrix, eine unter Aluminium (Al), Magnesium (Mg), Zink (Zn), Kupfer (Cu), Eisen (Fe), Zinn (Sn), Kobalt (Co) und Mangan (Mn) ausgewählte säureaktivierbare Metallkomponente und wenigstens einen Säureträger umfasst.

### Hintergrund der Erfindung

In Kunststoffmaterialien verpackte Produkte, aber auch die Verpackungsmaterialien aus Kunststoff selbst, sind dem Kontakt mit Luftsauerstoff ausgesetzt, wodurch die verpackten Produkte, aber auch die Verpackungen abgebaut werden, verderben oder sich in irgendeiner anderen Weise mit Nachteil verändern. Bei Lebensmitteln findet bestenfalls nur eine Verfärbung durch Oxidationsreaktionen statt, häufig tritt aber auch schnellerer Geschmacksverlust, Abbau ernährungsrelevanter Stoffe und Wachstum von Mikroorganismen und damit Entstehung gesundheitsschädlicher Stoffe, wie Schimmelpilzen und Toxinen, statt. Verpackte Arzneimittel können unter dem Einfluss von Sauerstoff durch oxidativen Abbau schneller als erwünscht ihre Wirkung und auch ihre ursprüngliche Darreichungsform aufgrund von Zerfallsreaktionen verlieren. Verpackungsmaterialien selbst können unter dem Einfluss von oxidativen Abbau- oder Zerfallsreaktionen selbst ihre Farbe verändern, trüb oder porös werden und ihre Dichtigkeit verlieren können, so dass die verpackten Produkte den Schutz durch das Verpackungsmaterial verlieren und den Umgebungseinflüssen ausgesetzt sind.

Bekannte Maßnahmen zum Schutz von Produkten oder Verpackungen gegen den Angriff durch Luftsauerstoff umfassen beispielsweise die Verwendung von Verbundfolien als Verpackungsmaterialien, sauerstoffbeständigen Beschichtungen auf dem Verpackungsmaterial, das Abpacken von Produkten unter Schutzgas, wie Stickstoff und/oder Kohlendioxid, die Verwendung von antimikrobiellen Stoffen und Konservierungsstoffen zur Verhinderung des Wachstums von Mikroorganismen und die Verwendung von sauerstoffzehrenden Materialien als Verpackungsmaterialien.

Sauerstoffzehrende Verpackungsmaterialien sind im Stand der Technik bekannt. Das Prinzip beruht darauf, dass das Verpackungsmaterial einen oxidierbaren Stoff enthält, mit dem der Luftsauerstoff abreagieren kann, ohne dass das Material selbst dadurch geschädigt wird, und der gebundene Luftsauerstoff auch nicht mehr mit den verpackten Produkten reagieren kann. Bekannt ist beispielsweise die Verwendung von reduziertem Eisenpulver als sauerstoffzehrendes Material, welches in ein Kunststoffverpackungsmaterial eingebettet ist. Das Eisen reagiert mit Sauerstoff unter Bildung von Oxiden.

Einen Überblick zum Stand der Technik auf diesem Gebiet liefert die WO-A-9640412, welche selbst eine sauerstoffzehrende Zusammensetzung mit einer oxidierbaren Metallkomponente, vorzugsweise Eisen, einer Elektrolytkomponente, vorzugsweise Natriumchlorid, und einer nichtelektrolytischen Säurekomponente offenbart. Die Säurekomponente dient der Aktivierung des Metalls in einer Redoxreaktion unter Bildung der Metallkationen und von Wasserstoffgas aus den Säureprotonen. Die Metallkationen können dann freien Sauerstoff unter Oxidbildung binden. Die nicht-elektrolytische Säurekomponente umfasst saures Natriumpyrophosphat. Gemäß der Lehre der WO-A-9640412 wird die Qualität der Sauerstoffabsorption der Zusammensetzung durch den Elektrolyten NaCl bestimmt. Ohne diesen Elektrolyten ist die Sauerstoffabsorption sehr schlecht.

Die EP 1 640 408 A1 beschreibt Sauerstofffängerzusammensetzungen, in denen als Sauerstofffänger eine Kombination aus Eisenpartikeln im Mikrometerbereich, kombiniert mit nanofeinen Eisenpartikeln, und einem Oxidationsbeschleuniger, der unter Alkalimetall-Bisulfat, Metallhalogeniden und Ascorbaten oder Kombinationen davon ausgewählt ist, enthalten ist. Durch den Zusatz eines Metallhalogenid-Promotors und eines Säuresalzkatalysators soll die Sauerstoffabsorptionsgeschwindigkeit der Zusammensetzung beschleunigt werden, wodurch die sauerstoffzehrenden Eigenschaften der Zusammensetzung sehr früh aktiviert werden.

Die WO-A-2008008715 beschreibt ebenfalls einen Sauerstofffänger mit einer Metallkomponente, einem Salz und einem sauren Material mit großer Oberfläche, bei dem es sich offensichtlich um ein poröses Material handelt, dessen Poren eine Säure tragen.

Ein Nachteil und Problem der bekannten sauerstoffzehrenden Systeme mit Metall und aktivierender Säure besteht darin, dass die Reaktion der Aktivierung des Metalls häufig zu einem sehr frühen Zeitpunkt einsetzt, beispielsweise schon bei der Herstellung des Kunststoffmaterials oder bei dessen Transport oder Lagerung, bevor es überhaupt zur Verpackung von Lebensmitteln oder anderen Produkten zum Einsatz kommt, wo die sauerstoffzehrende Wirkung erst benötigt wird. Ein weiterer Nachteil bekannter Systeme besteht darin, dass die sauerstoffzehrende Wirkung früh verbraucht ist und nicht ausreichend lange anhält.

### Aufgabe

Die Aufgabe der vorliegenden Erfindung bestand daher darin, eine beispielsweise als Verpackungsmaterial geeignete Zusammensetzung mit einer Kunststoffmatrix bereitzustellen, die Sauerstoff zehrende Eigenschaften aufweist, und diese Zusammensetzung dahingehend zu verbessern, dass diese Sauerstoff zehrenden Eigenschaften später als bei bekannten Zusammensetzungen aktiviert werden und/oder länger erhalten bleiben.

### Beschreibung der Erfindung

Gelöst wird die erfindungsgemäße Aufgabe durch eine Zusammensetzung, welche eine Kunststoffmatrix, eine unter Aluminium (Al), Magnesium (Mg), Zink (Zn), Kupfer (Cu), Eisen (Fe), Zinn (Sn), Kobalt (Co) und Mangan (Mn) ausgewählte säureaktivierbare Metallkomponente und wenigstens einen Säureträger umfasst, der im RoO-Test eine Oxidationsgeschwindigkeit (RoO = Rate of Oxidation) von weniger als 1000 ppm Eisen bei einer Reaktionszeit von 60 min aufweist, wobei die RoO definiert ist, wie es in der Beschreibung nachfolgend unter RoO (Rate of Oxidation) beschrieben ist, wobei der Säureträger unter Dicalciumphosphat-Dihydrat (DCPD), Natrium-Aluminium-Sulfat (SAS), Natrium-Aluminium-Phosphat (SALP), Kalium-Aluminium-Phosphat (PALP), Calcium-Magnesium-Aluminium-Phosphat, Calciumpolyphosphat, Magnesiumpolyphosphat, Calciumpyrophosphat, Magnesiumpyrophosphat, und Gemischen der vorgenannten Verbindungen ausgewählt ist.

### RoO (Rate of Oxidation)

Die RoO ist ein Maß für die Fähigkeit eines Säureträgers oder einer Kombination von Säureträgern, elementares Eisen zu oxidieren. Der RoO-Test ist im Sinne der vorliegenden Anmeldung wie folgt definiert:
100 g Wasser (H₂O dest.) werden in ein Becherglas eingewogen, das Becherglas mit einem Uhrglas abgedeckt und das Wasser unter Rühren auf 50°C erhitzt. Wenn die Temperatur erreicht ist, werden 1 g elementares Eisenpulver (Produkt ABC100.30 der Firma Höganäs AB, Schweden) und 4 g des Säureträgers oder der Kombination von Säureträgern hinzugefügt. Nach einer bestimmten Reaktionszeit (10 min, 30 min und/oder 60 min) wird das Becherglas von der Heizplatte genommen und die Lösung abdekantiert oder filtriert, um nicht umgesetztes elementares Eisen von der Lösung abzutrennen. Der Gehalt an gelöstem Eisen in der Lösung wird mittels Atomabsorptionsspektroskopie (AAS) und / oder Atomemissionsspektroskopie (AES, OES) bestimmt und in ppm Eisen angegeben.

Durch die vorliegende Erfindung können die schützenden Eigenschaften von sauerstoffzehrenden Zusammensetzungen in Kunststoffmaterialien deutlich verbessert werden. Hierfür ist es wichtig, dass der verwendete Säureträger oder die verwendete Kombination von Säureträgern die erfindungsgemäßen Anforderungen an die Oxidationsgeschwindigkeit (RoR) erfüllt. Mit der Erfindung konnte überraschenderweise erreicht werden, dass die sauerstoffzehrende Wirkung nicht verfrüht bereits bei der Herstellung und/oder beim Transport oder der Lagerung einsetzt und damit auch frühzeitig verbraucht wird. Des weiteren konnte durch die erfindungsgemäße Auswahl des Säureträgers oder der Kombinationen von Säureträgern, die die erfindungsgemäßen Kriterien der Oxidationsgeschwindigkeit (RoR) erfüllen, eine gegenüber bekannten Systemen länger anhaltende sauerstoffzehrende Wirksamkeit erzielt werden.

Wenn im Zusammenhang mit der vorliegenden Erfindung von einer unter den oben genannten Elementen ausgewählten säureaktivierbaren Metallkomponente die Rede ist, so soll dies im Sine der vorliegenden Erfindung auch Kombinationen der genannten Elemente bzw. säureaktivierbaren Metallkomponenten umfassen, soweit dies technisch machbar und sinnvoll ist. Gleichfalls soll, wenn im Zusammenhang mit der vorliegenden Erfindung in dieser Anmeldung von einem Säureträger die Rede ist, dies stets auch eine Kombination mehrerer Säureträger umfassen, soweit dies technisch machbar und sinnvoll ist.

In einer bevorzugten Ausführungsform der Erfindung weist der Säureträger im RoO-Test eine Oxidationsgeschwindigkeit (RoO = Rate of Oxidation) von weniger als 900 ppm Eisen oder von weniger als 800 ppm Eisen oder von weniger als 700 ppm Eisen oder von weniger als 600 ppm Eisen bei einer Reaktionszeit von 60 min auf.

In einer weiteren bevorzugten Ausführungsform der Erfindung weist der Säureträger im RoO-Test eine Oxidationsgeschwindigkeit (RoO = Rate of Oxidation) von weniger als 600 ppm Eisen, vorzugsweise weniger als 400 ppm Eisen bei einer Reaktionszeit von 30 min auf. Gleichzeitig oder alternativ weist der Säureträger im RoO-Test eine Oxidationsgeschwindigkeit von weniger als 300 ppm Eisen, vorzugsweise weniger als 200 ppm Eisen bei einer Reaktionszeit von 10 min auf.

Der Säureträger der vorliegenden Erfindung erfüllt die erfindungsgemäßen Anforderungen an die Oxidationsgeschwindigkeit (RoR). Er sollte in der Lage sein, die eingesetzte Metallkomponente zu aktivieren bzw. zu oxidieren. Bevorzugt

Erfindungsgemäße Säureträger sind Dicalciumphosphat-Dihydrat (DCPD), Natrium-Aluminium-Sulfat (SAS), Natrium-Aluminium-Phosphat (SALP), Kalium-Aluminium-Phosphat (PALP), Calcium-Magnesium-Aluminium-Phosphat, Calciumpolyphosphat, Magnesiumpolyphosphat, Calciumpyrophosphat, Magnesiumpyrophosphat, und Gemische der vorgenannten Verbindungen. Nicht alle der vorgenannten Phosphatverbindungen erfüllen als Säureträger in ihrer reinen Form die erfindungsgemäße Anforderung an die Oxidationsgeschwindigkeit (RoO). Sie können dann in modifizierter Form eingesetzt werden. Solche Modifikationen zur Reduzierung der Reaktionsgeschwindigkeit von Säureträgern sind dem Fachmann grundsätzlich aus dem Stand der Technik bekannt. Entsprechende Produkte mit verzögerter Reaktionsgeschwindigkeit sind auch im Handel erhältlich. Beispielsweise sind unterschiedlich stark reagierende Modifikationen des als Säureträger aus dem Stand der Technik bekannten sauren Natriumpyrophosphats (SAPP) handelsüblich erhältlich, die zum Beispiel durch Zusatz verschiedener Metallionen (Al, K, Ca etc.) hinsichtlich Ihrer Reaktionsgeschwindigkeit modifiziert sind. Die genauen Mechanismen, die zu der verzögerten Reaktionsgeschwindigkeit führen, sind bei den modifizierten Säureträgern jedoch nicht in jedem Fall bekannt bzw. vollständig verstanden.

In einer weiteren Ausführungsform der Erfindung enthält die Zusammensetzung die Metallkomponente in einer Menge von 0,1 bis 70 Gew.-%, vorzugsweise 5 bis 40 Gew.-%, bezogen auf das Gesamtgewicht der Zusammensetzung.

In noch einer weiteren Ausführungsform der Erfindung enthält die Zusammensetzung den Säureträger in einer Menge von 0,1 bis 70 Gew.-%, vorzugsweise 5 bis 40 Gew.-%, bezogen auf das Gesamtgewicht der Zusammensetzung,.

In einer weiteren Ausführungsform der Erfindung umfasst die Zusammensetzung wenigstens zwei Säureträger,
von denen ein erster der Säureträger im RoO-Test eine Oxidationsgeschwindigkeit (RoO = Rate of Oxidation) von weniger als 1000 ppm Eisen oder von weniger als 900 ppm Eisen oder von weniger als 800 ppm Eisen oder von weniger als 700 ppm Eisen oder von weniger als 600 ppm Eisen bei einer Reaktionszeit von 60 min aufweist und
von denen ein weiterer der Säureträger im RoO-Test eine Oxidationsgeschwindigkeit (RoO = Rate of Oxidation) aufweist, die um wenigstens 200 ppm Eisen oder um wenigstens 300 ppm Eisen oder um wenigstens 400 ppm Eisen oder um wenigstens 500 ppm Eisen oder um wenigstens 600 ppm Eisen bei einer Reaktionszeit von 60 min über der Oxidationsgeschwindigkeit des ersten Säureträgers liegt.

Die vorgenannte Kombination aus einem ersten Säureträger mit der erfindungsgemäß begrenzten Oxidationsgeschwindigkeit und einem weiteren Säureträger mit einer definiert höheren Oxidationsgeschwindigkeit als der erste Säureträger wird auch als Double-Acting-System bezeichnet. Dieses System mit einem schneller reagierenden und einem langsamer reagierenden Säureträger vereint verschiedene Vorteile.

Der Säureträger mit der höheren Oxidationsgeschwindigkeit verleiht dem System eine verstärkte Anfangsaktivierung, um beispielsweise möglichst viel von einem in einer Verpackung enthaltenem Sauerstoff frühzeitig aufzuzehren. Der weitere Säureträger mit der niedrigeren Oxidationsgeschwindigkeit sorgt für eine spätere und schwächere Aktivierung eines weiteren Teils der Metallkomponente und damit für eine länger anhaltende Wirksamkeit der Zusammensetzung. Diese Kombination in einem Double-Acting-System hat sich als besonders vorteilhaft im Sinne eines hohen und lang anhaltenden Schutzes von Produkten und Verpackungsmaterialien erwiesen.

Besonders bevorzugt ist oder umfasst die säureaktivierbare Metallkomponente Eisen (Fe).

Neben der Auswahl von säureaktivierbarer Metallkomponente und Säureträger(n) lassen sich die Eigenschaften der Zusammensetzung auch durch weitere Zusätze beeinflussen. In Ausführungsformen der Erfindung enthält die Zusammensetzung beispielsweise ein oder mehrere Trennmittel zur Verhinderung oder Verzögerung der vorzeitigen Reaktion zwischen Metallkomponente und Säureträger. Das Trennmittel ist bevorzugt ausgewählt unter Getreidestärke, wie beispielsweise Maisstärke, Reisstärke oder Weizenstärke, modifizierten Mehlen, Siliziumdioxid, wie beispielsweise pyrogener Kieselsäure, hydrophober Kieselsäure oder hydrophiler Kieselsäure, Tricalciumphosphaten, Calciumcarbonat, Calciumsulfat, Silanen, Fetten und Gemischen der vorgenannten. Durch die Zugabe der Trennmittel kann auch die Reaktionsgeschwindigkeit in der Kunststoffmatrix beeinflusst werden.

Bevorzugt werden als Kunststoffmatrix für die erfindungsgemäße Zusammensetzung thermoplastische Polymere eingesetzt. Beispiele für geeignete thermoplastische Polymere sind Polyolefine, wie Polyethylen, Polypropylen, Polybutylen, Polymethylpenten sowie Block-, Pfropf- und Copolymere davon, Styrolpolymere, wie Standard-Polystyrol, schlagfestes Polystyrol, Styrolacrylnitril, Acrylnitrilbutadienstyrol, Acrylnitrilstyrol, Acrylkautschuk, halogenhaltige Vinylpolymer, wie Polyvinylchlorid, Polyvinylidenchlorid, Polyvinylfluorid, Tetrafluormethylen-Hexafluormethylen-Copolymer, Ethylen-Tetrafluorethylen-Copolymer, Polychlortrifluorethylen, Ethylen-Chlortrifluorethylen-Copolymer, Acrylpoymere, Polyacrylat, Polymethacrylat, Polyacetale, wie Polyoxymethylen, lineare Polykondensate wie Polyamide (PA-6, PA-66, PA-610, PA-612, PA-11, PA-12 etc.), Polycarbonate, Polyester (z. B. Polyethylenterephthalat, Polybutylenterephthalat etc.), Polyimide, Polyarylketone, Polysulfone, Polyurethane, Polyphenylene, Polymere aus ungesättigten Alkoholen und Aminen oder Acylderivaten oder Acetalen davon, wie Polyvinylalkohol, Polyvinylacetate, Polyvinylbutyral, Polyvinylbenzoat, vernetzte Polykondensate und Polyadukte, wie Phenoplaste, Aminoplaste, Epoxidharze, ungesättigte Polyester, Polyurethan, modifizierte Naturstoffe, wie Cellulosester, einschließlich Copolymere oder Mischungen der vorgenannten Polymere.

Die Erfindung umfasst weiterhin eine Additivzusammensetzung für das Einbringen in eine Kunststoffmatrix, welche eine unter Aluminium (Al), Magnesium (Mg), Zink (Zn), Kupfer (Cu), Eisen (Fe), Zinn (Sn), Kobalt (Co) und Mangan (Mn) ausgewählte säureaktivierbare Metallkomponente und wenigstens einen Säureträger gemäß der vorangegangenen Beschreibung und den Patentansprüchen umfasst.

Vorzugsweise enthält die Additivzusammensetzung die Metallkomponente und den/die Säureträger in einem Gewichtsverhältnis von 1:10 bis 10:1, besonders bevorzugt 1:2 bis 2:1, und gegebenenfalls weitere Zuschlagstoffe.

Die erfindungsgemäße Additivzusammensetzung kann mit Vorteil in Pulverform oder eingebettet in eine Kunststoffmatrix in Granulatform, beispielsweise als ein sogenannter Masterbatch vorliegen. Unter dem Begriff Masterbatch versteht man in eine Kunststoffmatrix eingebettete Additivzusammensetzung in Form von Granulaten oder Pulvern, in denen die Additivzusammensetzung in Gehalten vorliegt, die höher sind als in der Endanwendung. Sie werden dem Kunststoff (Rohpolymer) zur Veränderung der Eigenschaften beigemischt. Masterbatches haben gegenüber dem Zusatz von verschiedenen Stoffen in Form von Pasten, Pulvern oder Flüssigkeiten den Vorteil, dass sie eine hohe Prozesssicherheit gewährleisten und sehr gut zu verarbeiten sind. Bei einem Masterbatch wird meist versucht das Additiv so weit wie möglich zu konzentrieren, d.h. so wenig Kunststoffmatrixmaterial wie möglich zu verwenden, um das Additiv oder die Additive einzubetten. Zur Herstellung eines Masterbatch werden die Additive, z.B. auch Farbpigmente, mit Rohpolymer, d. h. unbehandeltem Kunststoff-Granulat, vermischt. Diese Mischung wird anschließend in einem Extruder aufgeschmolzen und dann granuliert. Alternativ können die Komponenten auch direkt über unterschiedliche Dosierwaagen im Extruder gemischt und aufgeschmolzen werden. Ein Masterbatch ermöglicht eine einfache Handhabung aufgrund guter Dosierbarkeit.

Schließlich umfasst die Erfindung auch die Verwendung einer Additivzusammensetzung gemäß der vorangegangenen Beschreibung und den Patentansprüchen als sauerstoffzehrender Bestandteil in Kunststoffteilen aller Art, vorzugsweise in Verpackungen, Nahrungsmittelverpackungen, Folien etc. Die Verwendung der erfindungsgemäßen Zusammensetzung in Nahrungsmittelverpackungen ist besonders bevorzugt, da bei diesen die sauerstoffzehrenden Eigenschaften der erfindungsgemäßen Zusammensetzungen besonders zum Tragen kommen.

## Patentansprüche

1. Zusammensetzung, welche eine Kunststoffmatrix, eine unter Aluminium (Al), Magnesium (Mg), Zink (Zn), Kupfer (Cu), Eisen (Fe), Zinn (Sn), Kobalt (Co) und Mangan (Mn) ausgewählte säureaktivierbare Metallkomponente und wenigstens einen Säureträger umfasst, der im RoO-Test eine Oxidationsgeschwindigkeit (RoO = Rate of Oxidation) von weniger als 1000 ppm Eisen bei einer Reaktionszeit von 60 min aufweist, wobei die RoO definiert ist, wie es in der Beschreibung unter RoO (Rate of Oxidation) beschrieben ist, wobei der Säureträger unter Dicalciumphosphat-Dihydrat (DCPD), Natrium-Aluminium-Sulfat (SAS), Natrium-Aluminium-Phosphat (SALP), Kalium-Aluminium-Phosphat (PALP), Calcium-Magnesium-Aluminium-Phosphat, Calciumpolyphosphat, Magnesiumpolyphosphat, Calciumpyrophosphat, Magnesiumpyrophosphat, und Gemischen der vorgenannten Verbindungen ausgewählt ist.

2. Zusammensetzung nach Anspruch 1, **dadurch gekennzeichnet, dass** der Säureträger im RoO-Test eine Oxidationsgeschwindigkeit (RoO = Rate of Oxidation) von weniger als 900 ppm Eisen oder von weniger als 800 ppm Eisen oder von weniger als 700 ppm Eisen oder von weniger als 600 ppm Eisen bei einer Reaktionszeit von 60 min aufweist.

3. Zusammensetzung nach einem der vorangegangenen Ansprüche, **dadurch gekennzeichnet, dass** der Säureträger im RoO-Test eine Oxidationsgeschwindigkeit (RoO = Rate of Oxidation) von weniger als 600 ppm Eisen, vorzugsweise weniger als 400 ppm Eisen bei einer Reaktionszeit von 30 min und/oder von weniger als 300 ppm Eisen, vorzugsweise weniger als 200 ppm Eisen bei einer Reaktionszeit von 10 min aufweist.

4. Zusammensetzung nach einem der vorangegangenen Ansprüche, **dadurch gekennzeichnet, dass** sie
die Metallkomponente in einer Menge von 0,1 bis 70 Gew.-%, vorzugsweise 5 bis 40 Gew.-%, bezogen auf das Gesamtgewicht der Zusammensetzung, enthält
und/oder
den Säureträger in einer Menge von 0,1 bis 70 Gew.-%, vorzugsweise 5 bis 40 Gew.-%, bezogen auf das Gesamtgewicht der Zusammensetzung, enthält.

5. Zusammensetzung nach einem der vorangegangenen Ansprüche, **dadurch gekennzeichnet, dass** sie wenigstens zwei Säureträger umfasst,
von denen ein erster der Säureträger im RoO-Test eine Oxidationsgeschwindigkeit (RoO = Rate of Oxidation) von weniger als 1000 ppm Eisen oder von weniger als 900 ppm Eisen oder von weniger als 800 ppm Eisen oder von weniger als 700 ppm Eisen oder von weniger als 600 ppm Eisen bei einer Reaktionszeit von 60 min aufweist und
von denen ein weiterer der Säureträger im RoO-Test eine Oxidationsgeschwindigkeit (RoO = Rate of Oxidation) aufweist, die um wenigstens 200 ppm Eisen oder um wenigstens 300 ppm Eisen oder um wenigstens 400 ppm Eisen oder um wenigstens 500 ppm Eisen oder um wenigstens 600 ppm Eisen bei einer Reaktionszeit von 60 min über der Oxidationsgeschwindigkeit des ersten Säureträgers liegt.

6. Zusammensetzung nach einem der vorangegangenen Ansprüche, **dadurch gekennzeichnet, dass** die Kunststoffmatrix ein thermoplastischer Kunststoff ist.

7. Zusammensetzung nach einem der vorangegangenen Ansprüche, **dadurch gekennzeichnet, dass** die säureaktivierbare Metallkomponente Eisen (Fe) ist oder umfasst.

8. Additivzusammensetzung für das Einbringen in eine Kunststoffmatrix, welche eine unter Aluminium (Al), Magnesium (Mg), Zink (Zn), Kupfer (Cu), Eisen (Fe), Zinn (Sn), Kobalt (Co) und Mangan (Mn) ausgewählte säureaktivierbare Metallkomponente und wenigstens einen Säureträger umfasst, die gemäß einem der vorangegangenen Ansprüche definiert sind.

9. Additivzusammensetzung nach Anspruch 8, welche
die Metallkomponente und den/die Säureträger in einem Gewichtsverhältnis von 1:10 bis 10:1, vorzugsweise 1:2 bis 2:1, und gegebenenfalls weitere Zuschlagstoffe enthält.

10. Additivzusammensetzung nach Anspruch 8 oder 9 in Pulverform oder eingebettet in eine Kunststoffmatrix in Granulatform (Masterbatch).

11. Verwendung einer Additivzusammensetzung nach einem der Ansprüche 8 bis 10 als Sauerstoff zehrender Bestandteil in Kunststoffteilen, vorzugsweise in Nahrungsmittelverpackungen.

## Claims

1. A composition which includes a plastic matrix, an acid-activatable metal component selected from aluminium (Al), magnesium (Mg), zinc (Zn), copper (Cu), iron (Fe), tin (Sn), cobalt (Co) and manganese (Mn) and at least one acid carrier which in the RoO test has a rate of oxidation (RoO = rate of oxidation) of less than 1000 ppm of iron with a reaction time of 60 min, wherein the RoO is defined as described in the description under RoO (rate of oxidation) wherein the acid carrier is selected from dicalcium phosphate dihydrate (DCPD), sodium aluminium sulphate (SAS), sodium aluminium phosphate (SALP), potassium aluminium phosphate (PALP), calcium magnesium aluminium phosphate, calcium polyphosphate, magnesium polyphosphate, calcium pyrophosphate, magnesium pyrophosphate and mixtures of the aforementioned compounds.

2. A composition according to claim 1 **characterised in that** the acid carrier in the RoO test has a rate of oxidation (RoO) of less than 900 ppm of iron or less than 800 ppm of iron or less than 700 ppm of iron or less than 600 ppm of iron with a reaction time of 60 min.

3. A composition according to one of the preceding claims **characterised in that** the acid carrier in the RoO test has a rate of oxidation (RoO) of less than 600 ppm of iron, preferably less than 400 ppm of iron with a reaction time of 30 min and/or of less than 300 ppm of iron, preferably less than 200 ppm of iron with a reaction time of 10 min.

4. A composition according to one of the preceding claims **characterised in that** it
contains the metal component in an amount of 0.1 to 70% by weight, preferably 5 to 40% by weight, with respect to the total weight of the composition,
and/or
it contains the acid carrier in an amount of 0.1 to 70% by weight, preferably 5 to 40% by weight, with respect to the total weight of the composition.

5. A composition according to one of the preceding claims **characterised in that** it has at least two acid carriers
of which a first of the acid carriers in the RoO test has a rate of oxidation (RoO) of less than 1000 ppm of iron or less than 900 ppm of iron or less than 800 ppm of iron or less than 700 ppm of iron or less than 600 ppm of iron with a reaction time of 60 min, and of which a further one of the acid carriers in the RoO test has a rate of oxidation (RoO) which is above the rate of oxidation of the first acid carrier by at least 200 ppm of iron or by at least 300 ppm of iron or by at least 400 ppm of iron or by at least 500 ppm of iron or by at least 600 ppm of iron with a reaction time of 60 min.

6. A composition according to one of the preceding claims **characterised in that** the plastic matrix is a thermoplastic material.

7. A composition according to one of the preceding claims **characterised in that** the acid-activatable metal component is or includes iron (Fe).

8. An additive composition for introduction into a plastic matrix which includes an acid-activatable metal component selected from aluminium (Al), magnesium (Mg), zinc (Zn), copper (Cu), iron (Fe), tin (Sn), cobalt (Co) and manganese (Mn) and at least one acid carrier, which are defined in accordance with one of the preceding claims.

9. An additive composition according to claim 8 which
contains the metal component and the acid carrier or carriers in a weight ratio of 1:10 to 10:1, preferably 1:2 to 2:1, and possibly further additives.

10. An additive composition according to claim 8 or claim 9 in powder form or embedded in a plastic matrix in granule form (masterbatch).

11. Use of an additive composition according to one of claims 8 to 10 as an oxygen-consuming constituent in plastic parts, preferably in foodstuff packagings.

## Revendications

1. Composition qui présente une matrice de matière synthétique, une composante métallique pouvant être activée à l'acide sélectionnée parmi l'aluminium (Al), le magnésium (Mg), le zinc (Zn), le cuivre (Cu), le fer (Fe), l'étain (Sn), le cobalt (Co) et le manganèse (Mn), et au moins un véhicule acide, qui présente dans le test de RoO une vitesse d'oxydation (RoO = rate of oxidation) inférieure à 1 000 ppm de fer pour une durée de réaction de 60 min, où le RoO est défini tel que décrit dans la description sous l'intitulé RoO (rate of oxidation, ou vitesse d'oxydation), où le véhicule acide est sélectionné parmi le phosphate de dicalcium dihydraté (DCPD), le sulfate de sodium et d'aluminium (SAS), le phosphate de sodium et d'aluminium (SALP), le phosphate de potassium et d'aluminium (PALP), le phosphate de calcium, de magnésium et d'aluminium, le polyphosphate de calcium, le polyphosphate de magnésium, le pyrophosphate de calcium, le pyrophosphate de magnésium, et des mélanges des composés précédemment nommés.

2. Composition selon la revendication 1, **caractérisée en ce que** le véhicule acide présente dans le test RoO une vitesse d'oxydation (RoO = rate of oxidation) inférieure à 900 ppm de fer ou inférieure à 800 ppm de fer ou inférieure à 700 ppm de fer ou inférieure à 600 ppm de fer pour une durée de réaction de 60 min.

3. Composition selon l'une des revendications précédentes, **caractérisée en ce que** le véhicule acide présente dans le test RoO une vitesse d'oxydation (RoO = rate of oxidation) inférieure à 600 ppm de fer, de préférence inférieure à 400 ppm de fer pour une durée de réaction de 30 min, et/ou inférieure à 300 ppm de fer, de préférence inférieure à 200 ppm de fer pour une durée de réaction de 10 min.

4. Composition selon l'une des revendications précédentes, **caractérisée en ce qu'**elle contient
la composante métallique dans une quantité de 0,1 à 70 % en poids, de préférence de 5 à 40 % en poids, sur la base du poids total de la composition, et/ou
le véhicule acide dans une quantité de 0,1 à 70 % en poids, de préférence de 5 à 40 % en poids, sur la base du poids total de la composition.

5. Composition selon l'une des revendications précédentes, **caractérisée en ce qu'**elle comprend au moins deux véhicules acides,
parmi lesquels un premier des véhicules acides présente dans le test RoO une vitesse d'oxydation (RoO = rate of oxidation) inférieure à 1 000 ppm de fer ou inférieure à 900 ppm de fer ou inférieure à 800 ppm de fer ou inférieure à 700 ppm de fer ou inférieure à 600 ppm pour une durée de réaction de 60 min, et
parmi lesquels un autre des véhicules acides présente dans le test RoO une vitesse d'oxydation (RoO = rate of oxidation) qui est supérieure d'au moins 200 ppm de fer ou d'au moins 300 ppm de fer ou d'au moins 400 ppm de fer ou d'au moins 500 ppm de fer ou d'au moins 600 ppm de fer, pour une durée de réaction de 60 min, à la vitesse d'oxydation du premier véhicule acide.

6. Composition selon l'une des revendications précédentes, **caractérisée en ce que** la matrice de matière synthétique est une matière synthétique thermoplastique.

7. Composition selon l'une des revendications précédentes, **caractérisée en ce que** la composante métallique qui peut être activée à l'acide est ou comprend du fer (Fe).

8. Composition d'additif pour l'incorporation dans une matrice de matière synthétique, qui comprend une composante métallique pouvant être activée à l'acide sélectionnée parmi l'aluminium (Al), le magnésium (Mg), le zinc (Zn), le cuivre (Cu), le fer (Fe), l'étain (Sn), le cobalt (Co) et le manganèse (Mn), et au moins un véhicule acide, lesquels sont définis selon l'une des revendications précédentes.

9. Composition d'additif selon la revendication 8, qui contient la composante métallique et le/les véhicule(s) acide(s) selon un rapport de poids de 1:10 à 10:1, de préférence de 1:2 à 2:1, et éventuellement d'autres additifs.

10. Composition d'additif selon la revendication 8 ou 9 sous une forme pulvérulente ou incorporée dans une matrice de matière synthétique sous une forme de granulés (mélange maître).

11. Utilisation d'une composition d'additif selon l'une des revendications 8 à 10 en tant que composant consommant de l'oxygène dans des pièces en matière synthétique, de préférence dans des emballages alimentaires.
